# EUROPEAN PATENT APPLICATION

(11) **EP 2 169 677 A1**
(43) Date of publication of application: **31.03.2010**
(21) Application number: 08777572.2
(22) Date of filing: 25.06.2008
(51) Int. Cl.: G11B 7/254, C08F 290/14, G11B 7/24, G11B 7/257, G11B 7/26

(54) **ULTRAVIOLET-CURABLE COMPOSITION FOR LIGHT-TRANSMITTING LAYER AND OPTICAL DISK**

(30) Priority: 29.06.2007 JP 2007172077
(71) Applicant: DIC Corporation, Tokyo 174-8520 (JP)
(72) Inventor: KITSUNAI, Takashi, Kitaadachi-gun Saitama 362-8577 (JP); ITO, Daisuke, Kitaadachi-gun Saitama 362-8577 (JP)
(74) Representative: Albrecht, Thomas
(86) International application number: PCT/JP2008/061515
(87) International publication number: WO 2009/004960

(57) **Abstract**

An ultraviolet-curable composition of the present invention includes epoxy (meth)acrylate, urethane (meth)acrylate, and a silicone compound represented by formula (1):

(CH₃)₃Si-O-X-O-Si(CH₃)₃ (1)

wherein X represents a group having a structure in which n structural units represented by formula (2): 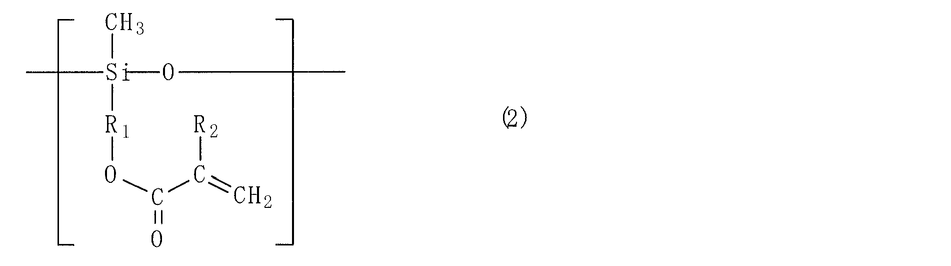 wherein R₁ represents an alkylene group of 1 to 18 carbon atoms, and a divalent group connected with one, or two or more groups selected from divalent groups having a structure in which plural alkylene groups of 2 to 18 carbon atoms are connected through an ether bond, R₁ may be bonded directly to Si or bonded through an oxygen atom to Si, and R₂ represents a hydrogen atom or a methyl group, and
m structural unit represented by formula (3): 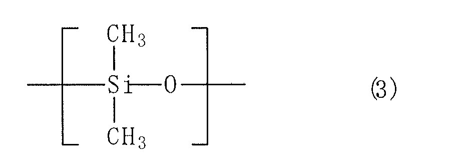 are connected in a random or blocked shape, provided that n is an integer within a range from 1 to 15 and n/m is within a range from 1/5 to 1/20.

## Description

### TECHNICAL FIELD

The present invention relates to an ultraviolet-curable composition which is used for a light transmission layer of an optical disk, and to an optical disk in which at least a light reflection layer and a light transmission layer are formed, and recording and reproduction are performed by a blue laser having an emission wavelength within a range from 370 to 430 nm through the light transmission layer.

### BACKGROUND ART

In recent years, developments in information technology and information networks have meant that the transmission of large volumes of recorded information can be performed on a regular basis. These developments have lead to demands for high-density, high-volume optical disks that are capable of recording and reproducing large-volume movie files, music files and computer data. Thus, high-density recording systems based on new optical disk structures that use a blue laser optical system with an even shorter wavelength than that used for DVD have already been proposed.

These new optical disks have a structure in which a recording layer is formed on a transparent or opaque substrate formed from a plastic such as polycarbonate, and a light transmission layer having a thickness of about 100 µm is then laminated on the recording layer, wherein the recording light or reproducing light, or both types of light are irradiated through the light transmission layer. In view of productivity, research of the light transmission layer of this type of optical disk has focused almost exclusively on the use of ultraviolet-curable compositions.

It is necessary for an optical disk that utilizes a blue laser to stably maintain recording and reading characteristics for a long period. Therefore, excellent shape stability is required for use as the light transmission layer, while excellent abrasion resistance is required for use as the outermost layer. As an ultraviolet-curable composition to be used for the light transmission layer of an optical disk in which recording or reproduction is performed by a blue laser, for example, there is disclosed an ultraviolet-curable composition in which an epoxy acrylate and an urethane acrylate are used in combination and 1-hydroxycyclohexyl phenyl ketone is used as a polymerization initiator (see Patent Document 1). Although the ultraviolet-curable composition is capable of forming a cured coating film having durability and high light transmittance, a further decrease of the change in the warping under high temperature and high humidity environments has been desired.

As a photocurable composition capable of forming a cured article layer that can suppress warping of an optical disk at an initial stage or during endurance, a composition containing urethane (meth)acrylate having a polyether skeleton is disclosed (see Patent Document 2). However, the cured article of the composition has poor abrasion resistance and scratching sometimes arose when it is applied as the light transmission layer as the outermost layer of the optical disk. Regardless of satisfactory change in the warping in a durability test, change in the reflectance sometimes occurs and a further improvement has been required.

As an ultraviolet-curable composition for a hard coat, having excellent antifouling properties, an ultraviolet-curable composition containing a silicone compound having a specific structure that has a structure capable of reacting with a photocurable compound as a side chain structure (see Patent Document 3). However, since a thick film is formed as the light transmission layer as the outermost layer of the optical disk, severe warping under high temperature and high humidity environments and severe warping of the film due to change in the external environment arise, and thus it was difficult to apply the ultraviolet-curable composition for the light transmission layer.

[Patent Document 1] Japanese Unexamined Patent Application, First Publication No. 2002-109785
[Patent Document 2] Japanese Unexamined Patent Application, First Publication No. 2007-42241
[Patent Document 3] Japanese Unexamined Patent Application, First Publication No. 2007-46049

### DISCLOSURE OF THE INVENTION

### PROBLEMS TO BE SOLVED BY THE INVENTION

An object to be achieved by the present invention is to provide an ultraviolet-curable composition capable of forming a light transmission layer that causes less change in the reflectance and less change in the warping under high temperature and high humidity environments, and is also excellent in abrasion resistance, and to provide an optical disk that causes less characteristics change even under high temperature and high humidity environments, and is also excellent in abrasion resistance.

### MEANS TO SOLVE THE PROBLEMS

In the present invention, an ultraviolet-curable composition using an epoxy acrylate, an urethane acrylate and a specific silane compound in combination enables formation of a cured coating film that suitably transmits light and has resistance to abrasion and also hardly causes warping, as well as a light transmission layer that is excellent in abrasion resistance.

That is, in the present invention, it is possible to realize an ultraviolet-curable composition that causes less change in the reflectance and less change in the warping under high temperature and high humidity environments, and is also excellent in abrasion resistance, and an optical disk that causes less characteristics change even under high temperature and high humidity environments, and is also excellent in abrasion resistance, by including epoxy (meth)acrylate, urethane (meth)acrylate, and a silicone compound represented by formula (1):

(CH₃)₃Si-0-X-0-Si(CH₃)₃ (1)

wherein X represents a group having a structure in which n structural units represented by formula (2):

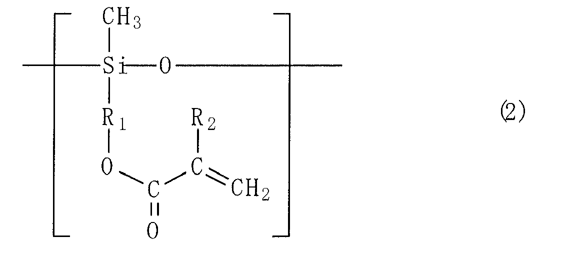

wherein R₁ represents an alkylene group of 1 to 18 carbon atoms, and a divalent group connected with one, or two or more groups selected from divalent groups having a structure in which plural alkylene groups of 2 to 18 carbon atoms are connected through an ether bond, R₁ may be bonded directly to Si or bonded through an oxygen atom to Si, and R₂ represents a hydrogen atom or a methyl group, and
m structural unit represented by formula (3):

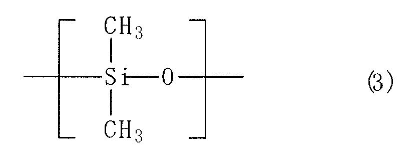

are connected in a random or blocked shape, provided that n is an integer within a range from 1 to 15 and n/m is within a range from 1/5 to 1/20, and the structural units represented by the formula (2) and the formula (3) are neither connected with each other nor connected with the other structural moiety through an oxygen-oxygen bond.

### EFFECTS OF THE INVENTION

Since the ultraviolet-curable composition for a light transmission layer of the present invention can form a light transmission layer that causes less change in the reflectance and less change in the warping even under high temperature and high humidity environments, it is possible to realize an optical disk that causes less deterioration of characteristics even under high temperature and high humidity environments. A cured film of the composition is excellent in abrasion resistance and, therefore, the light transmission layer can be applied as the outermost layer, and thus making it possible to realize an optical disk which is hardly scratched without forming a hard coat layer on the surface layer. The optical disk including such a cured film of the composition as the light transmission layer hardly causes deterioration of characteristics and scratching even under high temperature and high humidity environments, and thus causing less signal characteristics and satisfactorily performing recording and reproduction of information even by a blue laser having a short wavelength.

### BEST MODE FOR CARRYING OUT THE INVENTION

### [Silicone compound]

The silicone compound represented by formula (1) shown above used in the ultraviolet-curable composition of the present invention has, as a side chain structure, a site having proper compatibility with a photocurable compound and a site which reacts with a photocurable compound in a specific ratio. When a ultraviolet-curable composition containing the same is coated in the form of a film, in the vicinity of a surface of the coating film, a force of causing phase separation with the photocurable compound is applied to a siloxane bond site of a main chain that is likely to cause phase separation, while a force of compatibilizing with the photocurable compound is applied to a side chain moiety having compatibility, and thus it is considered that the existence probability of the siloxane structure site becomes higher in the vicinity of the surface layer. When the coating film is irradiated with ultraviolet light, the photocurable compound also reacts with a reactive group of the side chain of the silicone compound during curing, and thus a siloxane structure exists on the surface layer of the cured film with high probability. In this case, since plural side chain moieties serve as an anchor to one silicone compound, the silicone compound is firmly fixed to the cured film. Therefore, the ultraviolet-curable composition of the present invention can from a cured film having excellent antifouling properties and stain-wiping properties, and also can realize stable antifouling properties after a lapse of a long period, or even when the cured film is allowed to stand under high temperature and high humidity environments. In contrast, in the silicone compound that has not the same structure as that of the present invention, the plural anchor effect may not be obtained, resulting in insufficient fixation. Alternatively, it is impossible to increase the existence probability in the vicinity of the surface layer because sites each having a different compatibility are absent, resulting in poor antifouling properties and poor stain-wiping properties.

X in formula (1) shown above is a group having a structure in which n structural units represented by formula (2) shown above and m structural units represented by formula (3) shown above are connected in a random or blocked shape. The random shape means a structure in which structural units represented by formula (2) and structural units represented by formula (3) are connected at random in the irregular order, while the blocked shape means a structure in which the portion in which structural units represented by formula (2) are continuously bonded and the portion in which structural units represented by formula (3) are continuously bonded alternately appear. n is an integer within a range from 1 to 15, and preferably an integer within a range from 1 to 10. A ratio (n/m) of m to n is within a range from 1/5 to 1/20, and preferably from 1/5 to 1/15. The structural units represented by formula (2) and formula (3) are neither connected with each other, nor connected with the other structural portion through an oxygen-oxygen bond.

R₁ in formula (2) shown above is a group having a structure in which two or more groups selected from the groups described in formulas (I) and (II) shown below are connected.
(I) an alkylene group of 1 to 18 carbon atoms, for example, -CH₂ -, -CH₂CH₂CH₂-, -CH₂CH(CH₃)-, -CH₂(CH₂)₄CH₂-, -CH₂CH(CH₂CH₃)CH₂CH₂CH₂CH₂-, -CH₂(CH₂)₁₀CH₂- or -CH₂(CH₂)₁₆CH₂ -
(II) a divalent group having a polyoxyalkylene structure in which plural alkylene groups of 2 to 18 carbon atoms are connected through an ether bond
The group (II) is represented by formula: -(OR)_{P} -wherein R represents an alkylene group of 2 to 18 carbon atoms that may have a branched chain, and p is an integer of 1 or more. The group includes, for example, -(OCH₂CH₂)_{P}-, -(OC₃H₆)_{P} -, -(OCH₂CH₂CH₂CH₂)_{P} - and -(OCH₂(CH₂)₁₀CH₂)_{P} -. It may also be a group having a structure wherein a group having a structure in which -OR(s)- with molecular chains each having a different length are connected at random, for example, a group in which -OCH₂ CH₂ - and -OCH₂ CH(CH₃)- are bonded at random. When the group represented by (ii) is used as R₁, it is preferred to use a group of a polyether structure (polyoxyalkylene structure) having plural ether bonds. The group described in (ii) can be obtained from a polymer of an alkylene oxide such as ethylene oxide, propylene oxide or butylene oxide, or a cyclic ether such as tetrahydrofuran or alkyl-substituted tetrahydrofuran, or a copolymer of two or more kinds of them.

Among these, R₁ is preferably at least one group selected from an alkylene group of 1 to 6 carbon atoms, a divalent group represented by -(OR)ₜ - (R represents an ethylene group or a propylene group, and t represents an integer within a range from 2 to 20) and a divalent group in which ethylene oxide and propylene oxide are subjected to ring-opening addition polymerization at random, or a group in which two or more groups selected from them are connected. Among these, it is particularly preferably -CH₂ CH₂ CH₂ -, -CH₂ CH₂ CH₂ (OCH₂ CH₂ )_{P} - (p is an integer of 2 or more), or -CH₂ CH₂ CH₂ Y- (Y is a group in which -OC₂ H₄ - and -OC₃ H₆ - are bonded at random). The bond between the group described in (ii) and Si can be formed through an oxygen atom, but preferably has a structure bonded through an alkylene group. One end of the group (i) in R₁ can be directly boned to Si, and can be bonded through an oxygen atom to Si, but is preferably bonded directly to Si. R₂ in formula (2) shown above represents a hydrogen atom or a methyl group, but is preferably a hydrogen atom.

The silicone compound represented by formula (1) is commercially available and includes, for example, TEGO Rad 2200N manufactured by Degussa Japan Co., Ltd.

The silicone compound represented by formula (1) preferably has a number average molecular weight of 2,000 to 12,000, and more preferably from 3,000 to 8,000.

The content of the silicone compound represented by formula (1) to be included in the ultraviolet-curable composition is within a range from 0.05 to 5 parts by mass, and more preferably from 0.1 to 2.0 parts by mass, based on the ultraviolet-curable composition. When the content of the silicone compound is within the above range, stains hardly adhere on a surface of a surface protective layer of an optical information recording medium of the present invention. Also, adhered stains can be easily wiped off and excellent antifouling function can be stably imparted for a long period of time.

### [Epoxy (meth)acrylate]

Epoxy (meth)acrylate used in the present invention is not particularly limited as long as it can be obtained by reacting a compound having one or more epoxy groups in the molecule with acrylic acid, and can be modified with a polyester, polyether or rubber The total amount of remaining chlorine is preferably 2,000 ppm or less.

Among these, epoxy (meth)acrylate having a bisphenol skeleton is preferred because of its excellent durability, and epoxy (meth)acrylates represented by formulas (i), (iii) and (viii) can be used particularly preferably. Among these, epoxy (meth)acrylate represented by formula (iii) is particularly preferred since it hardly causes phase separation with the silicone compound represented by formula (1) shown above and has excellent compatibility, and thus making it possible to realize satisfactory transparency when formulated into a composition and to realize a light transmission layer having satisfactorily light transmittance.

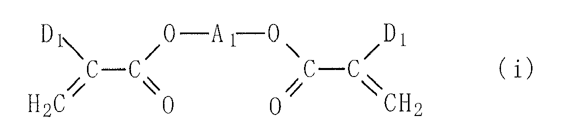

In formula (i), A₁ represents a group represented by formula (ii):

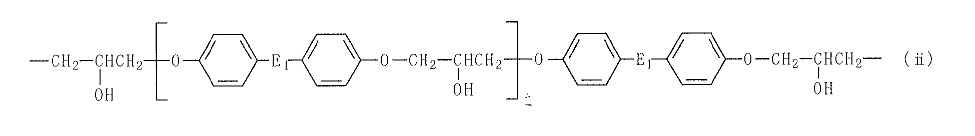

(in formula (ii), E₁ represents -SO₂ -, -CH₂ -, -CH(CH₃)- or -C(CH₃)₂ -, and i₁ represents 0 or an integer of 1 or more), and D₁ each independently represents a hydrogen atom or a methyl group.

Examples of the bisphenol type epoxy (meth)acrylate include epoxy acrylates obtained by reacting a (meth)acrylic acid with a bisphenol A-type epoxy resin, such as EPIKOTE 802, EPIKOTE 1001 or EPIKOTE 1004 manufactured by Yuka-Shell Epoxy Co., Ltd., and a bisphenol F-type epoxy resin, such as EPIKOTE 4001P, EPIKOTE 4002P or EPIKOTE 4003P, and specific examples thereof include UNIDIC V-5810 (manufactured by Dainippon Ink and Chemicals Inc.).

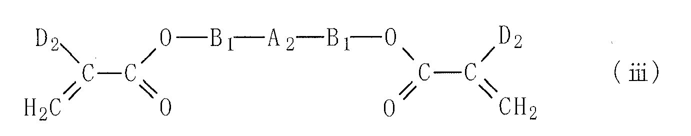

In formula (iii), A₂ is a long-chain alkyldiol group having a weight average molecular weight of 250 to 10,000, which may be substituted with an ester group, an ether group, an aromatic hydrocarbon group or a cyclic aliphatic group, and may have a branched chain; B₁ represents a group represented by formula (iv):

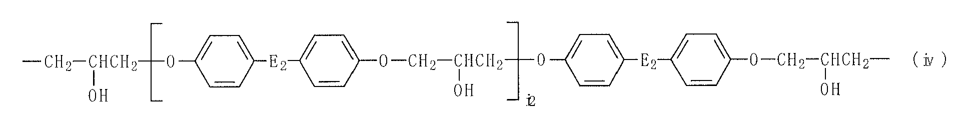

in formula (iv), E₂ represents -SO₂-, -CH₂-, -CH(CH₃)- or -C(CH₃)₂ -, and i₂ represents an integer within a range from 0 to 8; and D₂ each independently represents a hydrogen atom or a methyl group.

A₂ in formula (iii) shown above is preferably a group represented by any one of formulas (v) to (vii) in view of compatibility with a silicone compound.

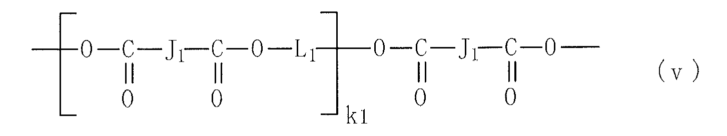

In formula (v), J₁ represents a divalent aromatic hydrocarbon group in which a hydrogen atom may be substituted by an alkyl group having 1 to 6 carbon atoms, or a divalent aliphatic hydrocarbon group having 2 to 10 carbon atoms which may have a branched chain,
L₁ represents a divalent aliphatic hydrocarbon group having 2 to 20 carbon atoms which may have a branched chain, or a group represented by formula shown below: -(R²O)_{P}-R²- (R² represents an alkylene group having 2 to 8 carbon atoms which may have a branched chain, and p represents an integer of 1 to 10), and
k₁ represents an integer of 1 to 20.

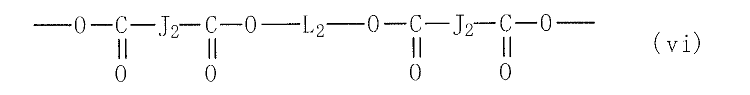

In formula (vi), J₂ represents a divalent aromatic hydrocarbon group in which a hydrogen atom may be substituted by an alkyl group having 1 to 6 carbon atoms, or a divalent aliphatic hydrocarbon group having 2 to 10 carbon atoms which may have a branched chain, and
L₂ represents a long-chain alkyldiol residue or a polyether diol residue which have a number average molecular weight of 250 to 10,0000.

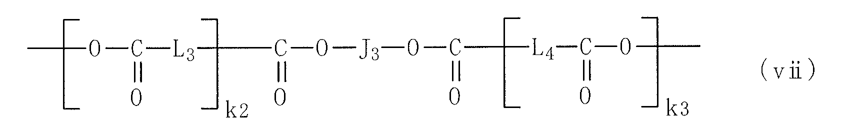

In the formula (vii), J₃ represents a divalent aromatic hydrocarbon group in which a hydrogen atom may be substituted by an alkyl group having 1 to 6 carbon atoms, or a divalent aliphatic hydrocarbon group having 2 to 10 carbon atoms which may have a branched chain,
L₃ and L₄ each independently represent a divalent aliphatic hydrocarbon group having 2 to 10 carbon atoms which may have a branched chain, and
k₂ and k₃ each independently represents an integer of 1 to 20.

Examples of the epoxy (meth)acrylates include DICLITE UE-8080 (manufactured by Dainippon Ink and Chemicals Inc.).

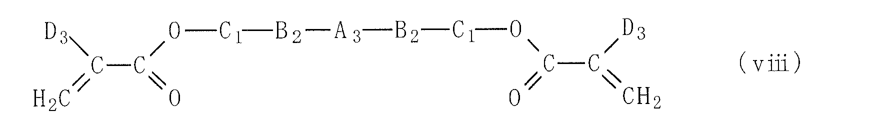

In formula (viii), A₃ represents a group represented by formula (ix):

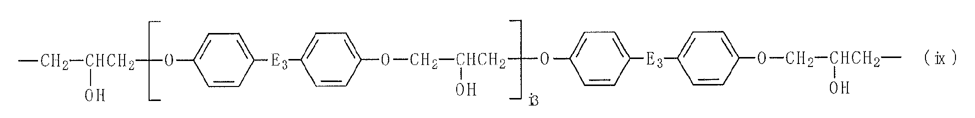

(in formula (ix), E₃ represents -SO₂-, -CH₂-, -CH(CH₃)- or -C(CH₃)₂ -, and n represents an integer within a range from 0 to 8), B₂ represents a group represented by formula (x):

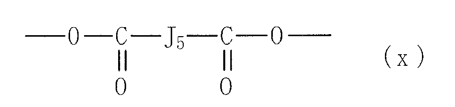

(in the formula (x), J₅ represents a divalent aromatic hydrocarbon group in which a hydrogen atom may be substituted with an alkyl group having 1 to 6 carbon atoms, or a divalent aliphatic hydrocarbon group having 2 to 10 carbon which may have a branched chain, C₁ represents a group represented by formula (xi):

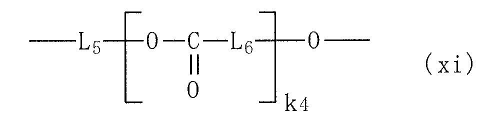

(L₅ and L₆ each independently represents a divalent aliphatic hydrocarbon group having 2 to 10 carbon atoms which may have a branched chain, and k₄ independently represents an integer of 1 to 20), or a group represented by formula (xii):

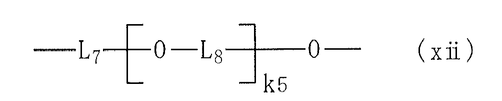

(L₇ and L₈ each independently represents a divalent aliphatic hydrocarbon group having 2 to 10 carbon atoms which may have a branched chain, and k₅ independently represents an integer of 1 to 20), and D₃ each independently represents a hydrogen atom or a methyl group.

Examples of the epoxy (meth)acrylates include CNUVE 151 (SARTOMER) and EBECRYL 3708 (DAICEL-CYTEC COMPANY LTD.).

The content of the epoxy (meth)acrylate in the ultraviolet-curable composition of the present invention is preferably from 50 to 80% by mass, and more preferably from 60 to 70% by mass, based on the content of the ultraviolet-curable compound in the ultraviolet-curable composition. When the content of the epoxy (meth)acrylate is within the above range, durability under high temperature and high humidity environments is excellent and the occurrence of wiping upon curing or under high temperature and high humidity environments is suppressed, and other characteristics are satisfactorily controlled.

The weight average molecular weight (Mw) measured by gel permeation chromatography (GPC) of the epoxy (meth)acrylate used in the present invention is preferably from 500 to 20,000, and more preferably from 800 to 5,000. When the structure and the molecular weight of the epoxy (meth)acrylate are within the above range, durability and light fastness of the optical disk using the ultraviolet-curable composition of the present invention are further improved. The weight-average molecular weight based on GPC can be determined by measuring under the conditions where, for example, HLC-8020 manufactured by Tosoh Corporation is used, GMHx1-GMHx1-G200Hx1-G1000Hx1w is used as the column, THF is used for the solvent, the flow rate is 1.0 ml/min, the column temperature is 40°C, the detector temperature is 30°C, and the molecular weight is based on standard polystyrene equivalent.

### [Urethane (meth)acrylate]

The ultraviolet-curable composition of the present invention contains urethane (meth)acrylate. Since cohesiveness is improved by an urethane bond of urethane (meth)acrylate and thus cohesive failure hardly arises, the resultant cured article has satisfactory tight adhesion. Oxygen transfer can be suppressed, and thus distributing to an improvement in surface hardness.

It is possible to use, as urethane (meth)acrylate used in the present invention, urethane (meth)acrylate obtained from a compound having two or more isocyanate groups in the molecule, a compound having a hydroxyl group and a (meth)acryloyl group and a compound having two or more hydroxyl groups in the molecule. Also, urethane (meth)acrylate obtained by reacting a compound having a hydroxyl group and a (meth)acryloyl group with a compound having two isocyanate groups in the molecule is particularly excellent in compatibility with the above silicone compound represented by formula (1) shown above and therefore can be preferably used.

Examples of the compound having two or more isocyanate groups in the molecule include polyisocyanates such as tetramethylene diisocyanate, hexamethylene diisocyanate, trimethylhexamethylene diisocyanate, bis(isocyanatomethyl)cyclohexane, cyclohexane diisocyanate, bis(isocyanatocyclohexyl)methane, isophorone diisocyanate, tolylene diisocyanate, xylylene diisocyanate, diphenylmethane diisocyanate and m-phenylene diisocyanate. Among these, a diisocyanate compound having two isocyanate groups in the molecule can be preferably used, and tolylene diisocyanate is particularly preferred since it causes neither deterioration of a color hue, nor deterioration of light permeability, and also contributes to compatibility with the silicone compound.

The compound having a hydroxyl group and a (meth)acryloyl group includes, for example, hydroxyethyl (meth)acrylate, hydroxypropyl (meth)acrylate and hydroxybutyl (meth)acrylate, and may also be a compound obtained by reacting these (meth)acrylates with a compound having two or more hydroxyl groups. Alternately, the compound may also be a compound obtained by reacting a compound having two or more hydroxy groups with (meth)acrylic acid and includes, for example, an addition reaction product of a glycidyl ether compound and (meth)acrylic acid, and a mono(meth)acrylate product of a glycol compound.

Polyols are preferably used as the compound having two or more hydroxyl groups, and specific examples thereof include polymeric polyols, as multimers of alkylene polyols, such as ethylene glycol, 1,2-propanediol, 1,3-propanediol, 2-methyl-1,3-propanediol, 1,3-butanediol, 1,4-butanediol, 1,5-pentanediol, 2-methyl-1,5-pentanediol, neopentyl glycol, 3-methyl-1,5-pentanediol, 2,3,5-trimethyl-1,5-pentanediol, 1,6-hexanediol, 2-ethyl-1,6-hexanediol, 2,2,4-trimethyl-1,6-hexanediol, 1,8-octanediol, trimethylolpropane, pentaerythritol, sorbitol, mannitol, glycerin, 1,2-dimethylolcyclohexane, 1,3-dimethylolcyclohexane and 1,4-dimethylolcyclohexane.

Among these, polyether polyol having an ether bond, polyester polyol having an ester obtained by reaction with polybasic acid or ring-opening polymerization of a cyclic ester, and polycarbonate polyol having a carbonate bond obtained by reaction with a carbonate are preferred. The molecular weight of at least portion of these polyols, preferably 15 mol% or more of the total amount of polyols, and more preferably 30 mol% or more of the total amount of polyols is preferably from 500 to 2,500.

Examples of the polyether polyol include, in addition to the multimers of the polyols, polytetramethylene glycol as a ring-opening polymer of a cyclic ether such as tetrahydrofuran, and adducts of alkylene oxides such as ethylene oxide, propylene oxide, 1,2-butylene oxide, 1,3-butylene oxide, 2,3-butylene oxide, tetrahydrofuran, styrene oxide and epichlorohydrin of the polyols.

Examples of the polyester polyol include reaction products of the polyols and polybasic acids such as maleic acid, fumaric acid, adipic acid, sebacic acid and phthalic acid, and polycaprolactone as a ring-opening polymer of a cyclic ether such as caprolacton.

Examples of the polycarbonate polyol include reaction products of the polyols and alkylene carbonates such as ethylene carbonate, 1,2-propylene carbonate and 1,2-butylene carbonate; or reaction products of the polyols and diaryl carbonates such as diphenyl carbonate, 4-methyldiphenyl carbonate, 4-ethyldiphenyl carbonate, 4-propyldiphenyl carbonate, 4,4'-dimethyldiphenyl carbonate, 2-tolyl-4-tolyl carbonate, 4,4'-diethyldiphenyl carbonate, 4,4'-dipropyldiphenyl carbonate, phenyltoluyl carbonate, bischlorophenyl carbonate, phenylchlorophenyl carbonate, phenylnaphthyl carbonate and dinaphthyl carbonate; or reaction products of the polyols and dialkyl carbonates such as dimethyl carbonate, diethyl carbonate, di-n-propyl carbonate, diisopropyl carbonate, di-n-butyl carbonate, diisobutyl carbonate, di-t-butyl carbonate, di-n-amyl carbonate and diisoamyl carbonate.

Although the polyols may be used alone, or two or more kinds of them may be used in combination, urethane (meth)acrylate using two or more kinds of polyether polyol, polyester polyol and polycarbonate polyol in combination is preferred, it is more preferred to use two or more kinds in combination. It becomes easy to satisfactorily control deformation resistance under high temperature and high humidity environments and surface hardness of the resultant cured film by using two kinds in combination. As the example of use of two kinds in combination, use of polyester polyol and polycarbonate polyol in combination is preferred so as to increase surface hardness, while use of polyester polyol and polyether polyol in combination is preferred so as to improve moist heat distortion resistance. It is preferred to use polyether polyol and polycarbonate polyol in combination so as to obtain intermediate characteristics between them.

The content of each polyol when used in combination with polyol is polyether polyol is preferably from 20 to 90% by mass, and more preferably from 30 to 80% by mass, based on the total amount of the polyol to be used. The content of the polyester polyol is preferably from 10 to 70% by mass, and more preferably from 20 to 60% by mass. It is easy to obtain surface hardness and moist heat distortion resistance of the cured article by adjusting the content of the polyether polyol or polyester polyol within the above range.

It is preferred that the urethane (meth)acrylate used in the present invention has a structure having no aromatic ring since transparency is improved.

Examples of preferred urethane (meth)acrylate used in the present invention include urethane acrylates having a polyether skeleton, such as FAU-742TP and FAU-306 manufactured by Dainippon Ink and Chemicals, Incorporated.; and urethane acrylates having a polyester skeleton, such as Photomer-6892 manufactured by Cognis Japan Ltd. and Ebecryl-8405 manufactured by DAICEL-CYTEC Company, Ltd.

The content of the urethane (meth)acrylate in the ultraviolet-curable composition of the present invention is preferably from 5 to 20% by mass, and particularly preferably from 5 to 15% by mass, based on the content of the ultraviolet-curable compound in the ultraviolet-curable composition. It becomes possible to impart proper flexibility to the cured film by adjusting the content of the urethane (meth)acrylate within the above range, and particularly change in the warping upon application of humidity shock decreases.

The weight average molecular weight (Mw) measured by gel permeation chromatography (GPC) of the urethane (meth)acrylate used in the present invention is preferably from 1,000 to 20,000, and more preferably from 1,500 to 10,000. Therefore, the optical disk obtained by using the ultraviolet-curable composition of the present invention shows more excellent durability and light fastness.

### [Monofunctional, difunctional or polyfunctional acrylate]

In the present invention, a composition having a desired viscosity and an elastic modulus after curing can be obtained by using an oligomer such as epoxy (meth)acrylate or urethane (meth)acrylate in combination with (meth)acrylate monomers such as a (meth)acrylate having one (meth)acryloyl group in one molecule (hereinafter abbreviated to a monofunctional (meth)acrylate), a (meth)acrylate having two (meth)acryloyl groups in one molecule (hereinafter abbreviated to a difunctional (meth)acrylate), and a (meth)acrylate having three or more (meth)acryloyl groups in one molecule (hereinafter abbreviated to a polyfunctional (meth)acrylate).

It is possible to use, as the other ultraviolet-curable compounds, various (meth)acrylates including monofunctional (meth)acrylates, for example, aliphatic (meth)acrylates such as ethyl (meth)acrylate, butyl (meth)acrylate, 2-ethylhexyl (meth)acrylate, nonyl (meth)acrylate, tridecyl (meth)acrylate, hexadecyl (meth)acrylate, octadecyl (meth)acrylate, isoamyl (meth)acrylate, isodecyl (meth)acrylate, isostearyl (meth)acrylate, ethoxyethoxyethyl (meth)acrylate, 2-hydroxyethyl (meth)acrylate, 3-chloro-2-hydroxypropyl (meth)acrylate, methoxyethyl (meth)acrylate, butoxyethyl (meth)acrylate and benzyl (meth)acrylate; aromatic (meth)acrylates such as nonylphenoxyethyl (meth)acrylate, tetrahydrofurfuryl (meth)acrylate, glycidyl (meth)acrylate, 2-hydroxy-3-phenoxypropyl (meth)acrylate, nonylphenoxyethyltetrahydrofurfuryl (meth)acrylate and phenoxyethyl (meth)acrylate; alicyclic (meth)acrylate such as dicyclopentenyl (meth)acrylate, dicyclopentanyl (meth)acrylate, dicyclopentenyloxyethyl (meth)acrylate, tetracyclododecanyl (meth)acrylate and cyclohexyl (meth)acrylate; and caprolactone-modified tetrahydrofurfuryl (meth)acrylate, acryloylmorpholine, isobornyl (meth)acrylate, norbornyl (meth)acrylate and 2-(meth)acryloyloxymethyl-2-methylbicycloheptaneadamanthyl (meth)acrylate.

Among these, tetrahydrofurfuryl acrylate, phenoxyethyl acrylate and ethoxyethoxyethyl acrylate are preferably used since the change in film thickness and the change in the warping can be suppressed.

It is possible to use, as the difunctional (meth)acrylate, 1,4-butanediol di(meth)acrylate, 3-methyl-1,5-pentanediol di(meth)acrylate, 1,6-hexanediol di(meth)acrylate, neopentyl glycol di(meth)acrylate, 2-methyl-1,8-octanediol di(meth)acrylate, 2-butyl-2-ethyl-1,3-propanediol di(meth)acrylate, ethylene glycol di(meth)acrylate, trimethylolpropane di(meth)acrylate, pentaerythritol di(meth)acrylate, polypropylene glycol di(meth)acrylate, di(meth)acrylate of diol, which is obtained by adding at least 4 mol of ethylene oxide or propylene oxide to 1 mol of neopentyl glycol, ethylene oxide-modified phosphoric acid (meth)acrylate, ethylene oxide-modified alkylated phosphoric acid di(meth)acrylate, diethylene glycol di(meth)acrylate, dipropylene glycol di(meth)acrylate, tripropylene glycol di(meth)acrylate, polyether (meth)acrylate, diethylaminoethyl (meth)acrylate, (meth)acrylate having a alicyclic structure, such as an alicyclic difunctional (meth)acrylate (for example, norbornane dimethanol di(meth)acrylate, norbornane diethanol di(meth)acrylate, di(meth)acrylate of diol, which is obtained by adding 2 mol of ethylene oxide or propylene oxide to norbornane dimethanol, tricyclodecane dimethanol di(meth)acrylate, tricyclodecane diethanol di(meth)acrylate, di(meth)acrylate of diol, which is obtained by adding 2 mol of ethylene oxide or propylene oxide to tricyclodecane dimethanol, pentacyclopentadecane dimethanol di(meth)acrylate, pentacyclopentadecane diethanol di(meth)acrylate, di(meth)acrylate of diol, which is obtained by adding 2 mol of ethylene oxide or propylene oxide to pentacyclopentadecane dimethanol, di(meth)acrylate of diol, which is obtained by adding 2 mol of ethylene oxide or propylene oxide to pentacyclopentadecane diethanol, dimethyloldicyclopentane di(meth)acrylate and hydroxypivalic acid neopentyl glycol di(meth)acrylate.

Among these, tricyclodecane dimethanol di(meth)acrylate, tripropylene glycol di(meth)acrylate and hydroxypivalic acid neopentyl glycol di(meth)acrylate are preferred, and hydroxypivalic acid neopentyl glycol di(meth)acrylate is particularly preferred.

Also, a trifunctional or higher polyfunctional (meth)acrylate can be used when it is required to adjust the elastic modulus of the film after being cured to a higher level. Examples thereof include bis(2-acryloyloxyethyl) hydroxyethyl isocyanurate, bis(2-acryloyloxypropyl) hydroxypropyl isocyanurate, bis(2-acryloyloxybutyl) hydroxybutyl isocyanurate, bis(2-methacryloyloxyethyl) hydroxyethyl isocyanurate, bis(2-methacryloyloxypropyl) hydroxypropyl isocyanurate, bis(2-methacryloyloxybutyl) hydroxybutyl isocyanurate, tris(2-acryloyloxyethyl) isocyanurate, tris(2-acryloyloxypropyl) isocyanurate, tris(2-acryloyloxybutyl) isocyanurate, tris(2-methacryloyloxyethyl) isocyanurate, tris(2-methacryloyloxypropyl) isocyanurate, tris(2-methacryloyloxybutyl) isocyanurate, trimethylolpropane tri(meth)acrylate, ditrimethylolpropane tetra(meth)acrylate, pentaerythritol tri(meth)acrylate, pentaerythritol tetra(meth)acrylate, dipentaerythritol penta(meth)acrylate, dipentaerythritol hexa(meth)acrylate, di- or tri(meth)acrylate of triol, which is obtained by adding 3 mol or more of ethylene oxide or propylene oxide to 1 mol of trimethylolpropane, and polyfunctional (meth)acrylates such as poly(meth)acrylates of dipentaerythritol.

Also, ultraviolet-curable compounds such as N-vinyl pyrolidone, N-vinylcaprolactam and vinylether monomer can be used, if necessary.

The content of the monofunctional (meth)acrylate in the ultraviolet-curable compounds contained in the ultraviolet-curable composition of the present invention is preferably from 3 to 40% by mass, and more preferably from 5 to 30% by mass. The content of the difunctional (meth)acrylate is preferably from 3 to 40% by mass, and more preferably from 5 to 35% by mass. The content of the trifunctional or higher polyfunctional (meth)acrylate other than epoxy (meth)acrylate is preferably 20% by mass or less, and more preferably 10% by mass or less.

When the ultraviolet-curable composition of the present invention is adjusted to have a viscosity of 800 to 3,000 mPa_{·}s, and more preferably from 1,000 to 2,500 mPa_{·}s, a thick light transmission layer can be satisfactorily formed.

The ultraviolet-curable composition of the present invention is preferably prepared such that the elastic modulus of the cured film obtained after irradiation with ultraviolet light is within a range from 100 to 2,000 MPa (at 25°C). In particular, a composition that can achieve the elastic modulus of 200 to 1,500 MPa may be more preferable. When the composition can achieve the elastic modulus within the above range, distortion which occurred during the curing process can be easily alleviated, and thus making it possible to obtain an optical disk which exhibits less change in warping even when exposed to high temperature and high humidity environments for a long time. In the improvement of abrasion resistance, a large degree of warping occurs even when a hard cured film is formed by increasing the elastic modulus of the cured film.
Therefore, when used as a light transmission layer, particularly a thick light transmission layer in an optical disk that records and reproduces signals by a blue laser having a short wavelength, signals can be satisfactorily recorded and reproduced by adjusting the elastic modulus within the range where warping does not occur.

### [Initiators, Additives]

The ultraviolet-curable composition of the present invention can use, in addition to epoxy (meth)acrylate as well as the above monofunctional, difunctional or polyfunctional (meth)acrylates, known photopolymerization initiators and thermal polymerization initiators.

Examples of the photopolymerization initiator used in the present invention include molecular cleavage-type photopolymerization initiators such as benzoin isobutyl ether, 2,4-diethylthioxanthone, 2-isopropylthioxanthone, benzyl, 1-hydroxycyclohexyl phenyl ketone, benzoin ethyl ether, benzyl dimethyl ketal, 2-hydroxy-2-methyl-1-phenylpropan-1-one and 1-(4-isopropylphenyl)-2-hydroxy-2-methylpropan-1-one and 2-methyl-1-(4-methylthiophenyl)-2-molpholiniopropan-1-one; and hydrogen abstraction-type photopolymerization initiators such as benzophenone, 4-phenylbenzophenone, isophthalpehnone and 4-benzoyl-4'-methyl-diphenyl sulfide.

In the ultraviolet-curable resin composition, it is also possible use additives if necessary, including surfactants, leveling agents, thermal polymerization inhibitors, antioxidants such as hindered phenols and phosphites, and photostabilizers such as hindered amines. It is possible to use sensitizers such as trimethylamine, methyldimethanolamine, triethanolamine, p-dimethylaminoacetophenone, ethyl p-dimethylaminobenzoate, isoamyl p-dimethylaminobenzoate, N,N-dimethylbenzylamine and 4,4'-bis(diethylamino)benzophenone, and moreover, other amines that do not undergo an addition reaction with polymerizable compounds described above may also be used in combination.

### [Optical disc]

An optical disk of the present invention is an optical disk in which at least a light reflection layer and a light transmission layer are formed on a substrate, and recording and reproduction are performed by laser light through the light transmission layer. In the optical disk of the present invention, by using the above ultraviolet-curable composition as the light transmission layer, the disk has excellent durability even under high temperature and high humidity environments, and even when silver or a silver alloy is used as the reflection layer, excellent durability can be achieved, meaning recording and reproduction of information can be conducted satisfactorily.

The light transmission layer in the optical disk of the present invention is a layer that efficiently transmits blue laser light, namely, laser light having an emission wavelength within a range from 370 to 430 nm, and at a thickness of 100 µm, the transmittance of light of 405 nm is preferably 85% or more, and more preferably 90% or more.

The thickness of the light transmission layer is preferably within a range from 70 to 110 µm. The thickness of the light transmission layer is usually set to approximately 100 µm, but because the thickness has a large effect on the light transmittance and the reading and recording of signals, the thickness must be carefully controlled. The light transmission layer may be formed as a single cured layer of the above thickness, or plural layers may be laminated together.

As the light reflection layer, any layer that reflects laser light and is capable of forming an optical disk that can read and reproduce information may be used, and examples of materials that can be used include metals such as gold, silver, copper or aluminum, alloys of these metals, or inorganic compounds such as silicon. In particular, the use of silver or an alloy containing silver as the main component is preferred, as such a material yields a higher reflectance for light having a wavelength in the vicinity of 400 nm. The thickness of the light reflection layer is preferably from about 10 to 60 nm.

A disk-shaped circular resin substrate can be used as the substrate, and the use of a polycarbonate as the resin is particularly preferred. In those cases where the optical disk is reproduce-only, pits that perform the role of information recording are formed within the surface of the substrate to which the light reflection layer is formed.

Furthermore, in the case of a writable optical disk, an information recording layer is provided between the light reflection layer and the light transmission layer. As this information recording layer, any layer that enables the recording and reproduction of information can be used, and any one of a phase change recording layer, a magneto-optical recording layer or an organic dye recording layer may be used.

When the information recording layer is a phase change recording layer, the information recording layer is usually composed of a dielectric layer and a phase change film. The dielectric layer has a function of buffering the heat generated in the phase change layer and a function of regulating the reflectance of the disk, and typically uses a mixed composition containing ZnS and SiO₂. The phase change film generates the difference in reflectance by changing the phase of the film between an amorphous state and a crystalline state, and can use a Ge-Sb-Te alloy, a Sb-Te alloy, or an Ag-In-Sb-Te alloy.

The optical disk of the present invention may include two or more information recording sites. For example, in the case of a read-only optical disk, a first light reflection layer and a first light transmission layer may be formed on the substrate containing the pits, and another layer may then be formed on top of the first light transmission layer, with a second light reflection layer and a second light transmission layer then formed on top of this other layer. In this case, pits may be formed in the first light transmission layer or the other layer formed on top of the first light transmission layer. Furthermore, in the case of an optical disk capable of recording and reproducing, the disk has a structure in which an information recording layer, a light reflection layer and a light transmission layer are formed on top of a substrate, but a structure having two information recording layers, in which an additional second light reflection layer, second information recording layer and second light transmission layer are formed on top of the above light transmission layer, or a structure having three or more information recording layers, in which additional layers are formed in a similar manner to above, may also be used. In those cases where plural layers are formed, the thickness of each layer is appropriately adjusted so that the total thickness is within the above range.

Furthermore, in the optical disk of the present invention, making the light transmission layer the outermost surface layer simplifies the production process, and is consequently preferred. Further, because it facilitates regulation of the surface hardness, a surface coating layer is preferably provided on the surface of the light transmission layer.

In the optical disk of the present invention, the change in the reflectance, measured after an optical disk having a 100 µm thick light transmission layer is exposed to high temperature and high humidity environments of 80°C and 85% RH for 240 hours, is preferably 4.0% or less, and particularly preferably 2.0% or less.

In the optical disk of the present invention, the change in the warping, measured after an optical disk having a 100 µm thick light transmission layer is exposed to high temperature and high humidity environments of 80°C and 85% RH for 240 hours, is preferably within ±1.0°, and particularly preferably within ±0.5°. Furthermore, the change in the warping, measured when only the humidity is rapidly changed from 25°C and 85% RH to 25°C and 30% RH, is preferably within ±1.0°, and particularly preferably within ±0.5°.

Furthermore, the change in the reflectance, measured when a light transmission layer is exposed to a fluorescent lamp for 10 days, is preferably within 4.0%, and particularly within 2.0%.

The optical disk of the present invention is a reproduce-only use disk or a readable and reproducible disk. The reproduce-only use disk can be obtained by providing pits that serve as an information recording layer while forming one piece of disk resin substrate by performing injection molding, forming a light reflection layer on the information recording layer, applying the ultraviolet-curable composition on the light reflection layer by performing spin coating, and then curing the ultraviolet-curable composition by performing UV irradiation to form a light transmission layer. The readable and reproducible disk can be obtained by forming a light reflection layer on one disk resin substrate, providing thereon an information recording layer such as a phase change film or an optical magnetic recording film, applying the ultraviolet-curable composition on the light reflection layer by performing spin coating, and then curing the ultraviolet-curable composition by performing UV irradiation to form a light transmission layer.

When the ultraviolet-curable composition that has been coated on the light reflection layer is cured by irradiation with ultraviolet light, either a continuous light irradiation system that uses a metal halide lamp or a high-pressure mercury lamp or the like, or a flash irradiation system disclosed in U.S. Patent No. 5,904,795 may be used.
In view of enabling efficient curing, the flash irradiation system is preferred.

It is preferred that the UV irradiation be controlled such that the accumulated light amount is within a range from 0.05 to 1 J/cm². The accumulated light amount is more preferably from 0.05 to 0.8 J/cm², and particularly preferably from 0.05 to 0.6 J/cm². The ultraviolet-curable composition used to form the optical disk of the present invention can be sufficiently cured even when the accumulated light amount is small. Accordingly, tackiness is not generated on the edge or the surface of the optical disk, and neither warping nor distortion occurs on the optical disk.

### [Embodiments]

With regard to embodiments of the optical disk according to the present invention, a single layer optical disk and a double layer optical disk will be shown as examples of specific configuration.

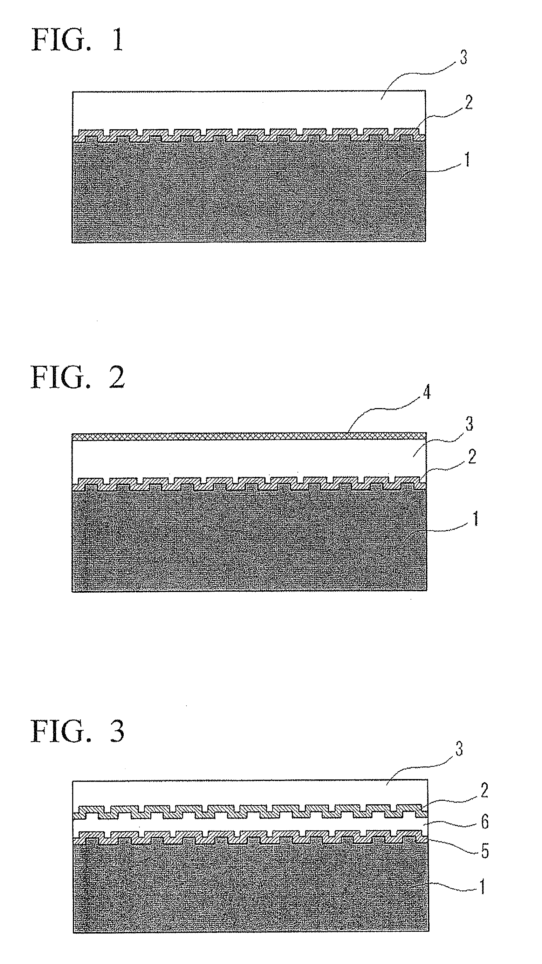

As a preferable embodiment of the single layer optical disk according to the present invention, for example, a configuration in which a light reflection layer 2 and a light transmission layer 3 are laminated on a substrate 1 as shown in FIG. 1 where information recording or information reproduction is performed by irradiating a blue laser beam to the side of the light transmission layer can be mentioned. The projected or recessed parts shown in the figure illustrate recording tracks (grooves). The light transmission layer 3 is formed of the cured article of the ultraviolet-curable composition of the present invention. The thickness of the light transmission layer 3 may be within a range of 100± 10 µm. The thickness of a substrate 1 may be about 1.1 mm, and the light reflection layer may be a thin film of silver.

FIG. 2 shows a configuration in which a hard coat layer 4 is provided as a top layer in the structure shown in FIG. 1. It is preferable that the hard coat layer have a higher hardness to achieve excellent abrasion resistance. The thickness of the hard coat layer is preferably from 1 to 10 µm, and more preferably from 3 to 5 µm.
With regard to a preferable embodiment of a double layer optical disk, for example, as shown in FIG. 3, a configuration of a double layer optical disk in which a light reflection layer 5 and a light transmission layer 6 are laminated on a substrate 1, and a light reflection layer 2 and a light transmission layer 3 are further laminated thereon where information recording or information reproduction is performed by irradiating a blue laser beam to the side of the light transmission layer 3 can be mentioned. The light transmission layer 3 and the light transmission layer 6 are formed of cured articles of ultraviolet-curable compositions, and at least one of the light transmission layers 3 and 6 may be formed of the cured article of the ultraviolet-curable composition according to the present invention. With regard to the thickness thereof, the total thickness of the light transmission layers 3 and 6 may be within a range of 100±10 µm. The thickness of the substrate 1 may be about 1.1 mm. The light reflection layer may be a thin film of silver.

In the configuration of the double layer optical disk, recording tracks (grooves) are also formed on the surface of the light transmission layer 6. Accordingly, the light transmission layer 6 may be configured of plural layers formed by laminating, on a layer formed of a cured film of an ultraviolet-curable composition having excellent adhesion properties, layers formed of a cured film of an ultraviolet-curable composition that can sufficiently form recording tracks. Additionally, a hard coat layer may also be provided as a top layer in this configuration.

A method for producing the optical disk shown in FIG. 1 will be described.
At first, the substrate 1 having guide grooves, which are so-called "recording tracks (grooves)" for tracking a laser beam, is provided by performing injection molding of a polycarbonate resin. Then, the light reflection layer 2 is formed by sputtering or evaporating a silver alloy or the like on the surface of the substrate 1 where the recording tracks are provided. The ultraviolet-curable composition according to the present invention is coated thereon, and an ultraviolet ray is irradiated to one side or both sides of the disk to cure the ultraviolet-curable composition, thereby forming the light transmission layer 3. In this manner, the optical disk shown in FIG. 1 is produced. To produce the optical disk shown in FIG. 2, the hard coat layer 4 is further formed on the disk of FIG. 1 by performing spin coating.

A method for producing the optical disk shown in FIG. 3 will be described.
At first, the substrate 1 having guide grooves, which are so-called "recording tracks (grooves)" for tracking a laser beam, is provided by performing injection-molding of a polycarbonate resin. Then, the light reflection layer 6 is formed by sputtering or evaporating a silver alloy or the like on the surface of the substrate 1 where recording tracks are provided.

The light transmission layer 5 is formed on the light reflection layer 6 using the ultraviolet-curable composition of the present invention or an arbitrary ultraviolet-curable composition. At this time, recording tracks (grooves) are formed thereon using a mold. The step of forming the recording tracks (grooves) may be conducted in the following manner. The ultraviolet-curable composition is coated onto the light reflection layer 6 formed on the substrate 1, and the mold that can form recording tracks (grooves) is applied to the coated ultraviolet-curable composition.
Then, an ultraviolet ray is irradiated to cure the ultraviolet-curable composition to one side or both sides of the disk where the mold is fixed. Subsequently, the mold is removed, a silver alloy or the like is sputtered or evaporated on the surface of the light transmission layer 5 where recording tracks (grooves) are present to form the light reflection layer 2. The ultraviolet curable composition is further coated thereon, and then, is cured by performing UV irradiation to form the light transmission layer 3. In this manner, the optical disk shown in FIG. 3 is produced. Additionally, when a phase change recording layer is used as the light reflection layer, the optical disk can be produced in the same manner as described above.

### EXAMPLES

The present invention will be described in more detail by way of Synthesis Examples and Examples, although the present invention is in no way limited by the following Examples presented. In the following Examples, "parts" are by weight.

In Examples 1 to 5 and Comparative Examples 1 to 5, the respective ultraviolet-curable compositions were prepared by heating and dissolving at 60°C for 3 hours each composition consisting of components shown in the following Table 1 (in which each value of the components mean "part by mass"). The obtained compositions were evaluated as described below, and the obtained results are shown in Tables 1 and 2.

### <Method of measuring viscosity>

The viscosity of the ultraviolet-curable composition at 25°C was measured using a B-type viscometer (manufactured by Tokyo Keiki Inc.).

### <Evaluation of transparency>

With respect to the ultraviolet-curable composition, transparency of the composition prepared was visually observed.

### <Method of measuring elastic modulus>

The ultraviolet-curable composition was coated to a glass plate in an amount sufficient to generate a cured film thickness of 100±10 µm, and the composition was then cured by irradiation with a metal halide lamp (fitted with a cold mirror, lamp output: 120 W/cm) in a nitrogen atmosphere in an irradiation dose of 500 mJ/cm². The elastic modulus of the resulting cured film was measured using an automatic dynamic viscoelasticity analyzer manufactured by TA Instruments Inc., and the dynamic elastic modulus E' at 25°C was recorded as the elastic modulus.

### <Conditions for producing optical disk>

An optical disk substrate of a diameter of 120 mm and a thickness of 1.2 mm was prepared and an alloy containing silver as the main component was sputtered onto the substrate in a thickness of 20 to 40 nm. The ultraviolet-curable composition shown in Table 2 was spin coated onto the metal reflection film in an amount sufficient to generate a film thickness following curing of 100±10 µm, and then the composition was irradiated twice with ultraviolet light using a mercury lamp fitted with a cold mirror 120 W/cm in an accumulated irradiation dose of 500 J/cm² (measured using an actinometer UVPF-36, manufactured by Eyegraphics Co., Ltd.), thereby curing the composition to obtain a test optical disk.

### <Durability test of optical disk>

Using an environmental testing device "PR-2PK" manufactured by Espec Corporation, optical disk samples were exposed to high temperature and high humidity environments of 80°C and 85% RH for 240 hours (durability test).

For each sample, a spectrophotometer "UV-3100" (manufactured by Shimadzu Corporation) was used to measure the specular reflectance at 405 nm, from the side of the light transmission layer, before and after the test, and evaluation was performed according to the following criteria.
Good: Change in specular reflectance before and after testing is within 1.0%
Poor: Change in specular reflectance before and after testing exceeds 1.0%

The change in the warping of the same samples before and after testing was measured using an Argus Blu device manufactured by Dr. Schwab Inspection Technology GmbH. The change in the warping was determined from the average value for the radial tilt in the region from a radius of 40 mm to a radius of 45 mm, and evaluation was performed according to the following criteria.
Good: Change in warping before and after testing is within ±1.0°
Poor: Change in warping before and after testing exceeds ±1.0°

### <Humidity shock test of optical disk>

Using an environmental testing device "PR-2PK" manufactured by Espec Corporation, optical disk samples were allowed to stand under the environments of 25°C and 85% RH for 48 hours and then only the humidity was rapidly reduced to 25° and 30% RH (humidity shock test). Three hours after taking out from the environmental testing device, warping was measured using an Argus Blu device manufactured by Dr. Schwab Inspection Technology GmbH. The change in the warping was determined from the average value for the radial tilt in the region from a radius of 40 mm to a radius of 45 mm, and evaluation was performed according to the above-described criteria.

### <Abrasion test of optical disk>

Using a rotary abrasion tester Rotary Abrader (manufactured by Toyo Seiki Seisaku Sho, Ltd.), a 50-revolution test of samples was carried out under conditions of a truck wheel CS-10F and load of 250 g. In accordance with JIS K7105, a total light transmittance and a diffusion transmittance at 405 nm were measured by a spectrophotometer "UV-3100" (manufactured by Shimadzu Corporation) and diffusion light transmittance was calculated, and then evaluation was performed according to the following criteria.
Good: Diffusion light transmittance before and after testing is within 2.0
Poor: Diffusion light transmittance before and after testing exceeds 2.0

**[Table 1]**

| | | Example 1 | Example 2 | Example 3 | Example 4 | Example 5 |
|---|---|---|---|---|---|---|
| Photopolymerizable composition | UE-8080 | 66 | 66 | 66 | 66 | 45 |
| | V-5810 | | | | | |
| | UA1 | 10 | | | | |
| | UA-160TM | | | | 10 | |
| | UA2 | | 12 | 12 | | 20 |
| | Ph4017 | 12 | 10 | 10 | 12 | 15 |
| | PETA | | | | | |
| | TEMPTA | | | | | |
| | TPGDA | | | 10 | | |
| | NPGDA | | | | | |
| | PHE | 7 | 7 | | 7 | 15 |
| | V-150 | 3 | 3 | | 3 | 3 |
| | A-CMP-1E | | | | | |
| | HEA | | | | | |
| Photopolymerization initiator | Irg184 | 2 | 2 | 2 | 2 | 2 |
| | Dorocure1173 | | | | | |
| Silicone compound | Tegorad2200N | 0.2 | 0.2 | 0.2 | 0.2 | 0.2 |
| Physical properties of composition | Viscosity | 2,000 | 1,950 | 1,770 | 2,000 | 1,800 |
| | Appearance | Transparent | Transparent | Transparent | Transparent | Transparent |
| Physical properties of cured film | Curing shrinkage ratio | 6.3 | 6.1 | 6.3 | 6.3 | 6.5 |
| | Elastic modulus (30°C) | 1,180 | 880 | 1,420 | 1,200 | 1,400 |
| Disk characteristics | After durability test Change in reflectance Change in warping | Good | Good | Good | Good | Good |
| | | Good | Good | Good | Good | Good |
| | Change in warping due to humidity shock | Good | Good | Good | Good | Good |
| | Abrasion test | Good | Good | Good | Good | Good |

**[Table 2]**

| | | Comparative Example 1 | Comparative Example 2 | Comparative Example 3 | Comparative Example 4 | Comparative Example 5 |
|---|---|---|---|---|---|---|
| Photopolymerizable composition | UE-8080 | | 66 | 66 | | 65 |
| | V-5810 | | | | | 11 |
| | UA1 | | | 10 | | |
| | UA-160TM | 60 | | | | |
| | UA2 | | 12 | | | |
| | Ph4017 | | 10 | 20 | 35 | |
| | PETA | | | | | |
| | TEMPTA | | | | 30 | |
| | TPGDA | | | | 28 | |
| | NPGDA | | | | | |
| | PHE | | 7 | | | 19 |
| | V-150 | | 3 | | | 3 |
| | A-CMP-1E | 30 | | | | |
| | HEA | 10 | | | | |
| Photopolymerization initiator | Irg184 | | 2 | 2 | 7 | 2 |
| | Dorocure1173 | 3 | | | | |
| Silicone compound | Tegorad2200N | | | | 0.5 | 0.2 |
| Physical properties of composition | Viscosity | 3,760 | 1,760 | 1,600 | 54 | 2,200 |
| | Appearance | - | - | - | White turbid | White turbid |
| Physical properties of cured film | Curing shrinkage ratio | 5.1 | 6.2 | 6.4 | 11.8 | 5.8 |
| | Elastic modulus (30°C) | 13 | 900 | 2,500 | 4,000 | 1,500 |
| Disk characteristics | After durability test | | | | | |
| | Change in reflectance | Poor | Good | Good | Good | Good |
| | Change in warping | Good | Good | Poor | Poor | Poor |
| | Change in warping due to humidity shock | Good | Good | Poor | Poor | Poor |
| | Abrasion test | Poor | Poor | Good | Good | Good |

The meanings of abbreviations in the table are as follows.
UE-8080: modified bisphenol A type epoxy acrylate (epoxy (meth)acrylate in which A₂ in formula (iii) is polyester dicarboxylic acid composed of ethylene glycol and adipic acid, and B₁ is a group represented by formula (iv) (in formula (iv), E₂ is -C(CH₃)₂ -, and i2 is 0)) manufactured by Dainippon Ink and Chemicals, Incorporated.
V-5810: epoxy acrylate (a mixture of an epoxy acrylate having a structure in which acrylic acid is directly added to a glycidyl group of a bisphenol A type epoxy resin, tricyclodecane dimethanol diacrylate and phenoxyethyl acrylate in a mass ratio of 7/3/3) manufactured by Dainippon Ink and Chemicals, Incorporated.
UA1: urethane acrylate obtained by reacting 1 mol ofpolytetramethylene glycol (Mw: 850) with 2 mol of tolylene diisocyanate and reacting with 2 mol of hydroxyethyl acrylate
UA-160TM: urethane acrylate (urethane acrylate obtained by reacting 1 mol of polytetramethylene glycol (Mw: 900) with 2 mol of isophorone diisocyanate and reactiung with 2 mol of hydroxyethyl acrylate) manufactured by SHIN-NAKAMURA CHEMICAL CO., LTD.
UA2: urethane acrylate obtained by reacting 2 mol of caprolactone-modified hydroxyethyl acrylate with 1 mol of tolylene diisocyanate
Ph4017: 1,6-hexanedioldi acrylate, manufactured by Cognis Japan Ltd.
PETA: pentaerythritol tetraacrylate
TMPTA: trimethylolpropane triacrylate
TPGDA: tripropylene glycol diacrylate
NPGDA: neopentyl glycol diacrylate
PHE: phenoxyethyl acrylate, manufactured by OSAKA ORGANIC CHEMICAL INDUSTRY LTD.
V-150: tetrahydrofurfuryl acrylate, manufactured by OSAKA ORGANIC CHEMICAL INDUSTRY LTD.
A-CMP-1E: paracumyl phenoxyethylene glycol acrylate, manufactured by SHIN-NAKAMURA CHEMICAL CO., LTD.
HEA: 2-hydroxyethyl acrylate
Irg184: 1-hydroxycyclohexyl phenyl ketone
Dorocure1173: 2-hydroxy-2-methyl-1-phenylprop an-1-one
TEGO Rad 2200N: reactive polysiloxane, Degussa Japan Co., Ltd.
*Compound having a number average molecular weight of 4,000 in which n in formula (1) is 3, n/m is 1/10, R₁ is -CH₂ CH₂ CH₂ X₁ - (X₁ represents a group in which 20 (on average) -OC₂ H₄ - are bonded to 6 (on average) -OC₃ H₆ - are bonded at random, and X₁ is boded to an acryloyl group in formula (1)), and R₂ is a hydrogen atom

As shown in Tables 1 to 2, the compositions of the present invention are excellent in transparency, and the optical disk using the composition of Example 1 is excellent in light transmittance and shows less change in the reflectance after the durability test and less change in the warping upon, and also shows satisfactory results in the durability test and shows excellent abrasion resistance in the abrasion resistance test. In contrast, the optical disk containing no silicone compound of Comparative Example 2 has not satisfactory abrasion resistance, and the optical disk containing no epoxy acrylate of Comparative Example 1 is inferior in abrasion resistance and shows large change in the reflectance. The optical disks, which do not contain a silicone compound and has merely improved elastic modulus, of Comparative Examples 3 and 4 shows large change in the warping in the durability test and cannot be applied for the light transmission layer. The optical disk containing no urethane acrylate of Comparative Example 5 cannot suppress shrinkage in the durability test and shows large warping.

### BRIEF DESCRIPTION OF THE DRAWINGS

FIG. 1 is a diagram illustrating one example of a single layer optical disk of the present invention.
FIG. 2 is a diagram illustrating one example of a single layer optical disk of the present invention.
FIG. 3 is a diagram illustrating one example of a double layer optical disk of the present invention.

### DESCRIPTION OF THE REFERENCE SYMBOLS

1: Substrate
2: Light reflection layer
3: Light transmission layer of ultraviolet-curable composition
4: Hard coat layer
5: Light reflection layer
6: Light transmission layer of ultraviolet-curable composition

## Claims

1. An ultraviolet-curable composition, which is used for a light transmission layer of an optical disk in which at least a light reflection layer and the light transmission layer are formed, and reproduction of information is performed by entering a blue laser from a side of the light transmission layer,
the composition comprising epoxy (meth)acrylate, urethane (meth)acrylate, and a silicone compound represented by formula (1):
(CH₃)₃Sr-0-X-0-Si(CH₃)₃ (1)
wherein X represents a group having a structure in which n structural units represented by formula (2): 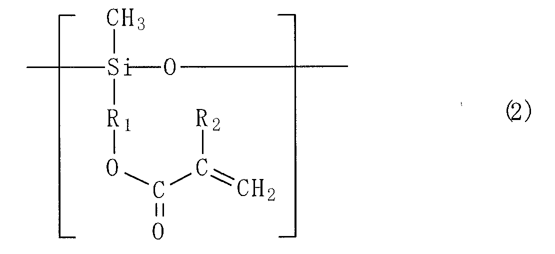 wherein R₁ represents an alkylene group of 1 to 18 carbon atoms, and a divalent group connected with one, or two or more groups selected from divalent groups having a structure in which plural alkylene groups of 2 to 18 carbon atoms are connected through an ether bond, R₁ may be bonded directly to Si or bonded through an oxygen atom to Si, and R₂ represents a hydrogen atom or a methyl group, and
m structural unit represented by formula (3): 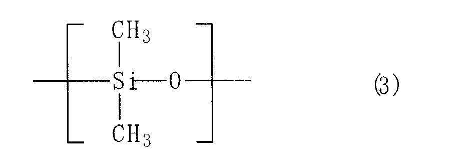 are connected in a random or blocked shape, provided that n is an integer within a range from 1 to 15 and n/m is within a range from 1/5 to 1/20, and the structural units represented by the formula (2) and the formula (3) are neither connected with each other nor connected with the other structural moiety through an oxygen-oxygen bond.

2. An ultraviolet-curable composition for a light transmission layer according to Claim 1, wherein the epoxy (meth)acrylate is a bisphenol A-type epoxy (meth)acrylate, and the urethane (meth)acrylate is an urethane (meth)acrylate obtained by reacting a compound having a hydroxyl group and a (meth)acryloyl group with a compound having two isocyanate groups in the molecule.

3. An ultraviolet-curable composition for a light transmission layer according to Claim 1 or 2, wherein the epoxy (meth)acrylate is an epoxy (meth)acrylate represented by formula (iii): 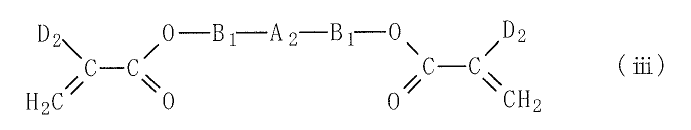 in formula (iii), A₂ is a long-chain alkyldiol group having a weight average molecular weight of 250 to 10,000, which may be substituted with an ester group, an ether group, an aromatic hydrocarbon group or a cyclic aliphatic group, and may have a branched chain;
B₁ represents a group represented by formula (iv): 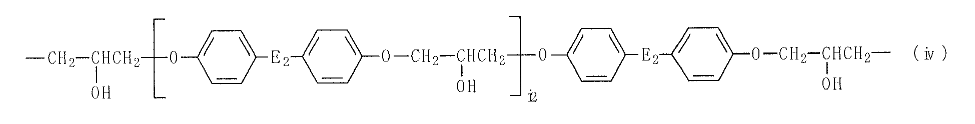 in formula (iv), E₂ represents -SO₂-, -CH₂ -, -CH(CH₃)- or -C(CH₃)₂ -, and i₂ represents an integer within a range from 0 to 8; and
D₂ each independently represents a hydrogen atom or a methyl group.

4. An ultraviolet-curable composition for a light transmission layer according to any one of Claims 1 to 3, wherein a content of the epoxy (meth)acrylate is within a range from 50 to 80% by mass based on a content of an ultraviolet-curable compound in the ultraviolet-curable composition.

5. An ultraviolet-curable composition for a light transmission layer according to any one of Claims 1 to 4, wherein a content of the urethane (meth)acrylate is within a range from 5 to 20% by mass based on a content of an ultraviolet-curable compound in the ultraviolet-curable composition.

6. An ultraviolet-curable composition for a light transmission layer according to any one of Claims 1 to 5, wherein the urethane (meth)acrylate has a weight average molecular weight of 500 to 20,000.

7. An ultraviolet-curable composition for a light transmission layer according to any one of Claims 1 to 6, wherein a B-type viscosity at 25°C is within a range from 800 to 3,000 mPa·s.

8. An ultraviolet-curable composition for a light transmission layer according to any one of Claims 1 to 7, wherein a elastic modulus at 25°C of a cured film obtained after irradiation with ultraviolet light is within a range from 100 to 2,000 MPa.

9. An optical disk in which at least a light reflection layer and a light transmission layer, which is formed by a cured matter of an ultraviolet-curable composition, are formed, and reproduction of information is performed by entering a blue laser from a side of the light transmission layer, wherein
the ultraviolet-curable composition is the ultraviolet-curable composition according to any one of Claims 1 to 8.

10. An optical disk according to Claim 9, wherein a thickness of the light transmission layer is within a range from 70 to 110 µm.
